# EUROPÄISCHE PATENTSCHRIFT

(11) **EP 4 666 850 B1**
(45) Veröffentlichungstag und Bekanntmachung des Hinweises auf die Patenterteilung: **02.12.2026**
(21) Anmeldenummer: 25180991.9
(22) Anmeldetag: 05.06.2025
(51) Int. Cl.: A01K 5/00, B01F 27/85, B01F 27/922, B01F 33/502

(54) **FUTTERMISCHWAGEN MIT VERTIKAL AUSGERICHTETEN MISCHSCHNECKEN**
FEED MIXING WAGON WITH VERTICAL MIXING SCREWS
WAGON MÉLANGEUR DE FOURRAGE AVEC VIS DE MÉLANGE VERTICALES

(30) Priorität: 21.06.2024 DE 102024117544
(43) Veröffentlichungstag der Anmeldung: 24.12.2025
(73) Patentinhaber: B. Strautmann & Söhne GmbH u. Co. KG, 49196 Bad Laer (DE)
(72) Erfinder: Wegmann, geb. Malewski, Benjamin, 49497 Mettingen (DE); Haggeney, Andreas, 33442 Herzebrock-Clarholz (DE)
(74) Vertreter: Dr. Träger & Strautmann PAe PartG mbB

(56) Entgegenhaltungen:
- EP-A1- 3 241 606
- EP-B1- 1 429 599
- WO-A2-03/009929
- US-B2- 6 983 902

## Beschreibung

Die Erfindung betrifft einen Futtermischwagen mit drei oder mehr vertikalen Mischschnecken nach dem Oberbegriff des Anspruchs 1. Futtermischwagen sind in vielfältigen Ausführungen bekannt. Sie werden insbesondere in landwirtschaftlichen Milchvieh-Betrieben zum Mischen und Verteilen von Silage- und sonstigem Futter verwendet. Hierbei werden die Futterkomponenten entweder durch eine am Futtermischwagen vorgesehene Futter-Entnahmevorrichtung oder durch eine Fremd-Befülleinrichtung aus einem Vorrat, beziehungsweise einem Vorratslager, entnommen und in den Mischbehälter eingefüllt. Das im Mischbehälter befindliche Material wird je nach Ausführung der Mischvorrichtung durch eine oder mehrere horizontal oder vertikal angeordnete Schnecken zu einer homogenen Mischration vermischt und anschließend mittels einer Austrageinrichtung ausgebracht.

Um große Viehbestände effizient füttern zu können ist es hilfreich, wenn der Mischbehälter des Futtermischwagens ein großes Fassungsvermögen aufweist. Die Höhe und die Breite eines Futtermischwagens ist in der Regel durch gesetzliche Vorgaben und räumliche Gegebenheiten der landwirtschaftlichen Anlage, wie der Höhe und Breite von Stalldurchfahrten, begrenzt. Um das Fassungsvermögen zu vergrößern, wird deshalb häufig die Länge des Futtermischwagens vergrößert. Bei Futtermischwagen mit vertikal angeordneten Mischschnecken, die im Folgenden als Vertikalmischwagen bezeichnet werden, werden deshalb bei verlängertem Mischbehälter mehrere Mischschnecken im Mischbehälter hintereinander angeordnet.

Aus US 6,983,902 B2 ist ein Futtermischwagen bekannt, der zwei Hauptmischschnecken und zwei Hilfsförderschnecken aufweist. Die beiden Hauptmischschnecken überstreichen am Behälterboden ausgebildete kreisrunde Flächen. Der Mischbehälter selbst hat eine in Längsrichtung gestreckte Kontur mit vertikalen Seitenwänden. Die von den Hauptmischschnecken überstrichene Kontur ähnelt einer 8 bzw. zwei aneinandergrenzenden Kreisen. Somit hat der Behälterboden eine im Wesentlichen ovale Kontur mit zwei darin eingefassten Kreisen, wobei zwischen den beiden Kreisen Bereiche verbleiben, die nicht direkt von den im Arbeitseinsatz rotierenden Hauptmischschnecken erreicht werden und insofern als tote Bereiche bezeichnet werden können. Um zu vermeiden, dass das in den toten Bereichen befindliche Mischgut lediglich auf Grund von Mitnahmeeffekten erfasst und in den Mischprozess einbezogen wird, sind angrenzend an die Außenwand und somit innerhalb der toten Bereiche zusätzliche Hilfsmischschnecken vorgesehen.

Zwar wird das Mischergebnis durch die zusätzlichen Hilfsmischschnecken verbessert, jedoch müssen bei diesem Futtermischwagen die Räder des Futtermischwagens entweder neben dem Mischbehälter oder unterhalb des Mischbehälters angebaut werden. Da in vielen Fällen eine Maximalhöhe und/oder eine Maximalbreite der Kombination aus Mischbehälter und Fahrwerk vordefiniert ist, bedingt sowohl das Unterbauen der Räder unter den Mischbehälter als auch das Anbauen der Räder seitlich neben dem Mischbehälter eine Einschränkung bzw. Reduktion eines Netto-Mischraum-Volumens.

Aus DE 10 2005 027 545 A1 ist ein Futtermischwagen mit zwei Mischschnecken bekannt, wobei der Durchmesser der in Fahrtrichtung gesehen vorderen Mischschnecke größer ist als der Durchmesser der in Fahrtrichtung gesehen hinteren Mischschnecke. Das in DE 10 2005 027 545 A1 beschriebene Konzept ist explizit für Futtermischwagen mit zwei Mischschnecken und zwei relativ großen Einzelrädern vorgesehen. Nachteilig ist eine mit der Einschränkung auf zwei Mischschnecken einhergehende Einschränkung der Mischbehältergröße.

Aus EP 2 347 648 A1 ist ein Vertikalmischwagen mit drei im Mischbehälter hintereinander angeordneten Mischschnecken bekannt. Die Räder des Futtermischwagens sind seitlich neben dem Futtermischwagen angebracht. Bei einer durch örtliche Gegebenheiten vordefinierten maximalen Spurbreite muss deshalb der Mischbehälter deshalb zumindest im Bereich der Räder relativ schmal ausgeführt sein. Hierdurch reduziert sich das Fassungsvermögen des Mischbehälters.

Aus US 7 322 537 B2 ist ein Vertikalmischwagen mit drei im Mischbehälter hintereinander angeordneten Mischschnecken bekannt, bei dem die Räder unterhalb der mittleren Mischschnecke und des Mischbehälterbodens angebracht sind. Um den Verlust an Fassungsvermögen zu begrenzen, ist die mittlere Mischschnecke auf einer stufenartigen Erhöhung angebracht. Die stufenartige Erhöhung kompensiert den Verlust an Fassungsvermögen nur teilweise und erschwert die Durchmischung des Futters in Fahrzeuglängsrichtung.

Aus WO 03/009929 A2 ist ein Futtermischwagen mit mehreren gleich großen, sich konisch nach oben hin verjüngenden, Mischschnecken bekannt. In Draufsicht gesehen überschneiden sich die bei Rotation der Mischschnecken ergebenden maximalen Kreisbahnen. Zur Vermeidung von Kollisionen weisen die Mischschnecken deshalb eine phasenweise verschobene Ausrichtung und/oder eine Anordnung in unterschiedlichen Höhen-Ebenen auf. Bei in unterschiedlichen Ebenen angeordneten Mischschnecken weist auch der Boden des Mischbehälters eine abgestufte Konfiguration auf.

Aufgabe der Erfindung ist es, die beschriebenen Nachteile zu beseitigen und einen Futtermischwagen mit wenigstens drei Mischschnecken vorzuschlagen, dessen Mischbehälter bei vordefinierter Mischwagenbreite und Fahrzeughöhe ein möglichst großes Fassungsvermögen aufweist.

Diese Aufgabe wird gelöst durch einen Futtermischwagen mit den Merkmalen des Anspruchs 1.

### Definitionen:

Unter einer Mischschnecke wird ein in einem Vertikalmischwagen angeordnetes Mischorgan mit einem Zentralrohr und wenigstens einem am Zentralrohr angebrachten Räum- und/oder Schneckenelement verstanden. Als Räumelement kann ein den Boden des Mischraums überstreichender Arm mit einer sehr kurzen oder gar keiner Schneckenwindung vorgesehen sein. Als Schneckenelement kann ein den Boden des Mischraums überstreichender Arm mit einer sich vertikal nach oben hin erstreckenden Schneckenwindung vorgesehen sein. Die Schneckenwindung kann eine sich vorzugsweise von unten nach oben hin konisch verjüngende Kontur aufweisen.

Unter dem Radius einer Mischschnecke wird ein Maximalradius verstanden, der sich aus dem Abstand der Zentralrohr-Mittelachse zum äußersten Punkt der Schneckenwindung ergibt. Bei einer Vertikalschnecke mit konischer ansteigender Schneckenwindung befindet sich der Maximalradius räumlich gesehen am Schneckenwindungsanfang.

Der Futtermischwagen umfasst:
- ein Fahrgestell mit daran angebrachten Rädern,
- einen Mischbehälter mit einer umlaufenden Behälterwand, einem Boden und einer in Fahrtrichtung ausgerichteten Mittelachse und
- eine im Mischbehälter angeordnete Mischeinrichtung zur Verarbeitung eines oder mehrerer in den Mischbehälter eingefüllten Futtermittels.

Die Mischeinrichtung weist wenigstens drei Mischschnecken auf, nämlich eine in Fahrtrichtung gesehen vordere Mischschnecke mit einem ersten Radius, eine in Fahrtrichtung gesehen hintere Mischschnecke mit einem zweiten Radius sowie wenigstens eine zwischen der vorderen Mischschnecke und der hinteren Mischschnecke angeordnete mittlere Mischschnecke mit einem dritten Radius. Durch die Integration einer dritten und gegebenenfalls auch einer oder mehrerer weiterer Mischschnecken, die alle entlang einer Fahrzeugmittelachse angeordnet sind, vergrößert sich somit der Innenraum des Mischbehälters. Zwar sind Futtermischwagen mit drei oder mehr hintereinander angeordneten Mischschnecken grundsätzlich als Stand der Technik bekannt, jedoch sind bei solchen bekannten Futtermischwagen die Räder entweder unter oder neben dem Mischbehälter angeordnet. In beiden Fällen wird bei definierten Abmessungen für die Fahrzeugbreite und die Fahrzeughöhe der zur Verfügung stehende Bauraum nicht optimal ausgenutzt.

Erfindungsgemäß ist vorgesehen, dass der dritte Radius wenigstens einer mittleren Mischschnecke kleiner als der erste Radius der vorderen Mischschnecke und/oder der zweite Radius der hinteren Mischschnecke ist. Durch den kleineren Radius wenigstens einer mittleren Mischschnecke ergibt sich in einem in Fahrtrichtung gesehen mittleren Bereich des Mischbehälters, und damit auch in einem mittleren Bereich des Futtermischwagens insgesamt, eine Einschnürung. Diese Einschnürung bildet einen Freiraum, in dem sich je nach Bedarf und erforderlicher Traglast an jeder Seite des Futtermischwagens ein oder mehrere Räder montieren lassen. Die Fahrzeugräder müssen also nicht unterhalb des Mischbehälters angeordnet werden, um unter Inkaufnahme einer reduzierten Mischbehälterhöhe eine möglichst große Breite des Behälters zu realisieren. Sie müssen auch nicht unter Inkaufnahme einer insgesamt reduzierten Mischbehälterbreite neben dem Mischbehälter montiert werden. Tatsächlich muss nur im Bereich der Räder selbst eine reduzierte Mischbehälterbreite in Kauf genommen werden.

Die erfindungsgemäße mittlere Mischschnecke mit kleinerem Radius optimiert somit die Behältergröße im Hinblick auf die Mischbehälterhöhe und die Mischbehälterbreite.

Der Mischbehälter weist im Bereich der einen oder der mehreren mittleren Mischschnecke(n) eine konkave Kontur mit außerhalb des

Vorratsbehälters angeordneten Freiräumen zur Aufnahme eines Teilbereichs der Räder auf. Die konkave Kontur der Freiräume erstreckt sich auf einen Bereich, der zur Aufnahme eines oberen Teilbereichs der Räder vorgesehen ist. Vereinfacht gesagt ist im montierten Zustand ein oberer Teilbereich der Räder in die Kontur des Mischbehälters eingelassen, wobei selbstverständlich um die Außenkontur der Räder herum ein ausreichendes Spiel vorzusehen ist. Durch das Einlassen der Räder in die Mischbehälter-Kontur reduziert sich die Reduktion des Mischraum-Fassungsvermögens auf ein Minimum.

In einer bevorzugten Ausführungsform sind der erste Radius der vorderen Mischschnecke und der zweite Radius der hinteren Mischschnecke gleich groß. Da die eine, oder wenigstens eine, der im mittleren Bereich vorgesehenen Mischschnecke(n) einen kleineren Radius aufweist, ergibt sich somit eine Einschnürung im mittleren Bereich des Mischbehälters, die in Fahrzeuglängsrichtung gesehen vorzugsweise symmetrisch ausgeführt ist. Im Bereich der mittleren Einschnürung ergeben sich an beiden Seiten des Mischbehälters die schon genannten Freiräume zur Anbringung der Fahrzeugräder.

In einer weiteren bevorzugten Ausführungsform weisen die am Fahrgestell montierten Räder eine äußere Spurbreite auf, die eine maximale Mischwagenbreite zu jeder Außenseite des Futtermischwagens hin um einen Überstand von weniger als 300 mm, vorzugsweise von weniger als 150 mm, höchst vorzugsweise von 0 mm überragt. Hierdurch ergibt sich ein zusätzlicher Spielraum bei der konzeptionellen Gestaltung des Futtermischwagens zur Optimierung des Fassungsvermögens im Hinblick auf die Parameter Mischwagenbreite, Fahrzeughöhe, Fahrzeuglänge und Konturgestaltung des Mischbehälter-Mischraums und der äußeren Freiräume für die Räder. Beispielsweise kann es günstig sein, in Draufsicht gesehen einen gewissen Überstand der Räder gegenüber der Mischwagenbreite zuzulassen, da hierdurch bei gleicher Radgröße der Radius der mittleren Mischschnecke entsprechend vergrößert werden kann. Unter der Mischwagenbreite wird ein Maximalmaß verstanden, das sich durch die Breite des Mischbehälters zuzüglich gegebenenfalls am Mischbehälter angebrachter und die Breite des Mischbehälters überragender starrer Zusatzteile ergibt. Bei den genannten Zusatzteilen kann es sich beispielsweise um seitlich am Mischbehälter angebrachte Ausbringtüren und deren zugehörige Schutzeinrichtungen handeln.

In einer bevorzugten Ausführungsform erweitert sich die Behälterwand des Mischbehälters im Bereich der mittleren Mischschnecke von einer unteren Behälterinnenweite zu einer oberen Behälterinnenweite konisch, so dass die Räder zumindest teilweise von der sich konisch erweiternden Behälterwand überragt werden. Die den Mischraum begrenzende Behälterwand ist somit im Bereich der mittleren Mischschnecke nicht vertikal ausgeführt. Sie ist vielmehr in diesem Bereich am Behälterboden relativ schmal und im Bereich eines oberen Randes des Mischbehälters relativ breit ausgeführt. Im Gegensatz zu einem Mischbehälter mit vertikaler Behälterwand ergibt sich somit ein sich nach oben hin konisch erweiternder Mischraum und damit ein erhöhtes Fassungsvermögen des Mischbehälters. Zudem begünstigt ein sich konisch erweiternder Mischraum den Mischprozess. Der Grund hierfür ist, dass eine Vertikalschnecke das Mischgut in der Mitte des Mischraums maulwurfartig von unten nach oben fördert, das oben angelangte Mischgut von nachdrückendem Mischgut in Richtung Mischbehälterwand verdrängt wird und anschließend an der konisch ausgeführten Behälterwand wieder Richtung Behälterboden hinabgleitet.

In einer bevorzugten Ausführungsform weist der Mischbehälter einen Mischraum mit darin angebrachten Leitelementen auf, wobei die Leitelemente im Bereich des Bodens gemeinsam mit Teilbereichen der Behälterwand eine an den Radius der Mischschnecken angepasste Umfangskontur aufweisen, so dass bei Rotation der Mischschnecken der Boden weitgehend vollständig von den Mischschnecken überstrichen wird.

Da die Mischschnecken im Arbeitseinsatz kreisförmige Bereiche des Mischbehälter-Bodens überstreichen, ergibt sich als Gesamt-Umfangskontur des von allen Mischschnecken überstrichenen Bodens ein Gebilde aus aneinandergereihten Kreisen beziehungsweise Kreisbogenabschnitten. Grenzt die Behälterwand in Teilbereichen nicht an diese aus Kreisbogenabschnitten gebildete Kontur an, so ergeben sich in diesen Teilbereichen Abschnitte, in denen Mischgut sich ablagern kann, ohne in den Mischprozess einbezogen zu werden. Insofern ist es günstig, die Übergangsstelle von Behälterboden zu Behälterwand so auszuführen, dass die Behälterwand an der genannten Übergangsstelle der Kontur der aneinandergereihten Kreisbogenabschnitte entspricht.

Grundsätzlich ist es möglich, die gewünschte Kontur des Mischraums ausschließlich auf Basis der Behälterwand selbst auszubilden. Da zur Herstellung der Behälterwand-Bauteile in der Regel großformatige Stahlbleche verwendet werden, sind hierzu aufwendige Zuschneide- und/oder Umformarbeiten erforderlich. Um die Komplexität des Herstellprozesses zu reduzieren, sind deshalb die genannten Leitelemente vorgesehen. Vereinfacht gesagt kann der Mischbehälter selbst in einer fertigungstechnisch relativ einfach herzustellenden Grundform ausgebildet sein und die gewünschte Kontur des Mischbehälter-Mischraums durch zusätzlich eingebaute Leitelemente ausgebildet werden.

Vorzugsweise ist vorgesehen, dass die von der Behälterwand und den Leitelementen am Boden des Futtermischwagens gebildete Umfangskontur sich in Richtung eines oberen Randes des Mischbehälters konisch erweitert. Die in ihrem unteren Bereich an die Kontur der Kreisbogenabschnitte angepassten Leitelemente dienen also nicht nur zur Vermeidung von Bereichen, die nicht von den Mischschnecken überstrichen werden, sondern auch zur Optimierung des Mischraum-Fassungsvermögens und der im Mischprozess realisierbaren Mischqualität, die unter anderem von der Kontur des Mischraums abhängig ist.

In einer bevorzugten Ausführungsform ist der Mischbehälter des Futtermischwagens in selbsttragender Bauweise ausgeführt. Unter einer selbsttragenden Bauweise ist zu verstehen, dass der Futtermischwagen keinen Fahrgestellrahmen aufweist, welcher den Mischbehälter trägt und an den beispielsweise die Fahrzeugachsen oder andere Komponenten gekoppelt sind. Durch den Verzicht auf ein Fahrgestell beziehungsweise einen Fahrzeugrahmen ergibt sich eine sehr kompakte Bauweise, so dass
- bei gleicher Gesamthöhe des Futtermischwagens mehr Bauraum für den Mischbehälter zur Verfügung steht und damit ein größeres Behältervolumen ermöglicht wird oder
- bei einem gleich großen Behälter die Gesamthöhe reduziert werden kann.

In einer bevorzugten Ausführungsform kann vorgesehen sein, dass die unterschiedlich großen Mischschnecken des Futtermischwagens im Arbeitseinsatz eine gleiche Umfangsgeschwindigkeit aufweisen. Die gleich große Umfangsgeschwindigkeit wird dadurch realisiert, dass eine kleinere Mischschnecke mit einer größeren Drehzahl angetrieben wird als eine größere Mischschnecke. Bei mechanisch angetriebenen Mischschnecken können die Getriebe eine dementsprechende Übersetzung aufweisen, bei hydraulisch oder elektrisch angetriebenen Mischschnecken kann die gleich große Umfangsgeschwindigkeit durch eine Steuerung mit geeigneten Schneckenantriebseinrichtungen wie Elektro- oder Hydraulikmotoren realisiert sein. Durch eine gleich große Umfangsgeschwindigkeit der Mischschnecken lässt sich eine gleichmäßige Mischwirkung erzielen.

Alternativ zu einer gleich großen Umfangsgeschwindigkeit der Mischschnecken kann auch vorgesehen sein, dass die mittlere Mischschnecke im Arbeitseinsatz eine größere Umfangsgeschwindigkeit aufweist als die vordere Mischschnecke und/oder die hintere Mischschnecke. Dies hat den Vorteil, dass die Menge an durchmischtem Futter der kleineren, mittleren Mischschecke pro Zeiteinheit gesteigert werden kann. Hierdurch ist es möglich, die Mischleistung der mittleren Mischschnecke je nach Bedarf an die Mischleistung der vorderen und/oder hinteren Mischschecke anzupassen.

Alternativ oder ergänzend zu einer Veränderung der Mischleistung einer Mischschnecke über eine Änderung der Drehzahl kann auch eine veränderte Geometrie einer Mischschnecke im Vergleich zu einer anderen Mischschnecke vorgesehen sein. Beispielsweise kann vorgesehen sein, dass die mittlere Mischschnecke eine Schneckenwindung mit einer Steigung aufweist, die größer ist als eine Steigung der vorderen Mischschnecke und/oder der hinteren Mischschnecke. Durch eine Vertikalschnecke mit einer größere Steigung der Schneckenwindung wird pro Schneckenumdrehung mehr Mischgut aufwärts bewegt als durch eine Vertikalschnecke mit einer kleineren Steigung.

Weiterhin kann vorgesehen sein, dass der Futtermischwagen eine Verstelleinrichtung zur Änderung der Drehzahl wenigstens einer Mischschnecke aufweist. Hierbei kann es sich um ein mechanisches Getriebe oder einen hydraulischen oder elektrischen Antrieb wenigstens einer Mischschnecke handeln. Mittels einer geeigneten Steuerung lässt sich die Mischleistung und/oder der Leistungsbedarf der Mischschnecken über die genannte Verstelleinrichtung an individuelle Parameter, wie beispielsweise an die Menge des Mischguts oder die durch eine Zugmaschine eines gezogenen Futtermischwagens bereitgestellte Antriebsleistung, anpassen.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt ein erstes Ausführungsbeispiel eines Futtermischwagens mit drei im Mischraum angeordneten Vertikalschnecken;
- Fig. 2: zeigt den Futtermischwagen gemäß Fig. 1 in einer Draufsicht;
- Fig. 3: zeigt den Futtermischwagen gemäß Fig. 1 in einer weiteren Draufsicht ohne Mischnecken;
- Fig. 4: zeigt ein zweites Ausführungsbeispiel eines Futtermischwagens mit vier im Mischraum angeordneten Vertikalschnecken;
- Fig. 5: zeigt den Futtermischwagen gemäß Fig. 4 in einer Draufsicht;
- Fig. 6: zeigt den Futtermischwagen gemäß Fig. 4 in einer weiteren Draufsicht ohne Mischnecken.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung eines Futtermischwagens.

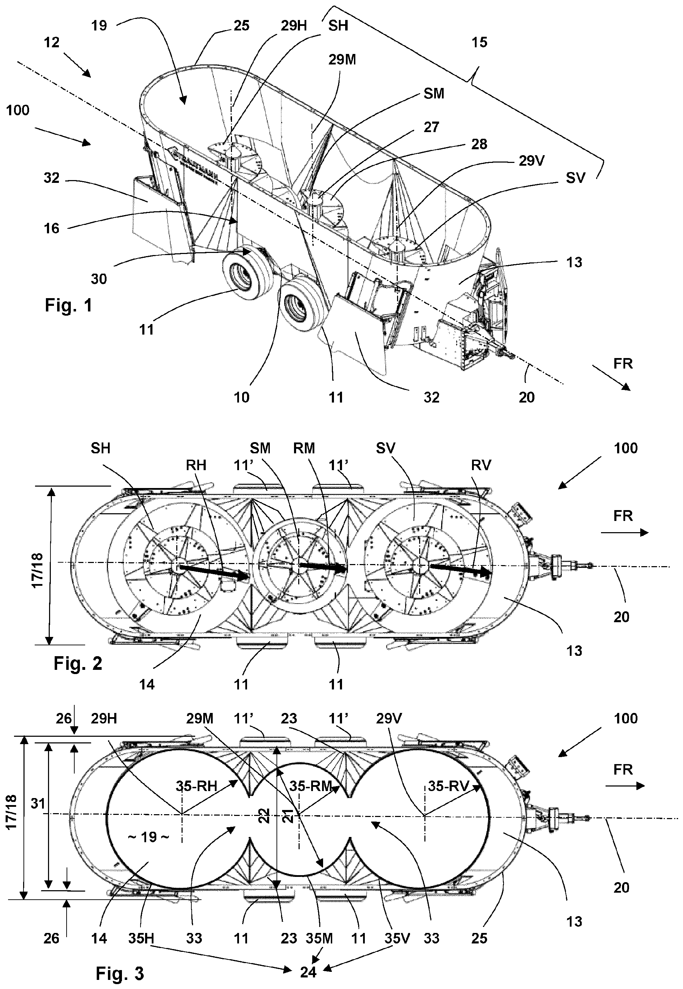

Fig. 1 zeigt ein erstes Ausführungsbeispiel eines Futtermischwagens 100 mit einem Mischbehälter 12 und einer darin angeordneten Mischeinrichtung 15. Der Mischbehälter 12 wird gebildet durch einen Boden 14 und eine Behälterwand 13 mit einem oberen Rand 25. Innerhalb des Mischbehälters 12 befindet sich ein nach oben hin offener Mischraum 19.

Im unteren Bereich des Mischbehälters 12 sind Ausbringeinrichtungen 32 vorgesehen, die eine verschließbare Tür in der Behälterwand 13 sowie eine Schutzeinrichtung zur Gewährleistung der Arbeitssicherheit bei geöffneter Tür umfassen. Die genannte Schutzeinrichtung umfasst starre Halterungen und ein von der Halterung eingefasstes flexibles Schutztuch.

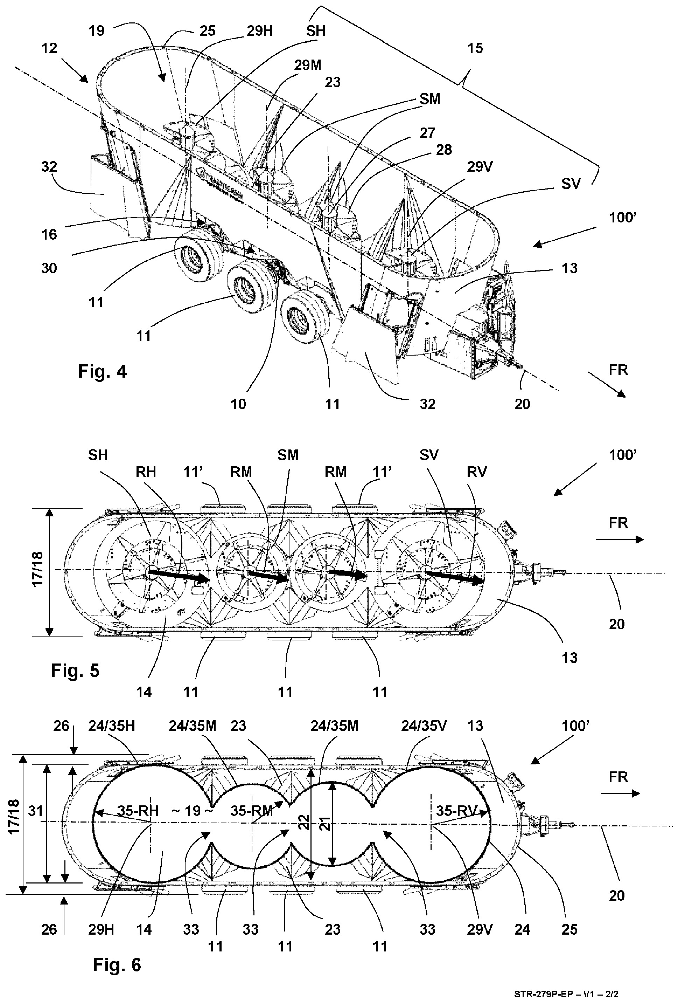

Die Mischeinrichtung 15 wird gebildet aus drei in einem Mischraum 19 in Fahrtrichtung FR gesehen hintereinander entlang einer Mittelachse 20 angeordneten Vertikalschnecken. Die Vertikalschnecken werden nachfolgend im Hinblick auf eine für den Futtermischwagen 100 vorgesehene Fahrtrichtung FR als vordere Mischschnecke SV, hintere Mischschnecke SH und mittlere Mischschnecke SM bezeichnet. Die Mischschnecken SV, SH und SM umfassen jeweils ein Zentralrohr 27 mit einer Mittelachse 29V (Mittelachse der vorderen Mischschnecke SV), 29H (Mittelachse der hinteren Mischschnecke SH) und 29M (Mittelachse der einen oder der mehreren mittleren Mischschnecken SM). Alle Mischschnecken SV, SH und SM umfassen jeweils wenigstens eine am Zentralrohr 27 angebrachte, sich nach oben konisch verjüngende Schneckenwindung 28. Die Mischschnecken SV, SH und SM weisen Radien RV, RH und RM auf, die sich von der Mittelachse 29 bis zum äußersten Punkt der Schneckenwindung 28 erstrecken (vgl. Fig. 2 und Fig. 4). Die Mischschnecken SV, SH und SM sind zudem so im Mischbehälter 12 angeordnet, dass ihre Mittelachsen 29V, 29H und 29M die horizontale Mittelachse 20 des Futtermischwagens 100 schneiden.

Der Futtermischwagen 100 weist ein Fahrgestell 10 mit zwei Rädern 11, die an der in Fahrtrichtung FR gesehen rechten Seite angeordnet sind und zwei Rädern 11' auf, die an der linken Seite angeordnet sind (Tandem-Fahrwerk). Da das Fahrgestell 10 unterhalb des Bodens 14 angebracht ist, befinden sich auch die Achsen der Räder 11, 11' unterhalb des Bodens. Der reduzierte Radius RM der mittleren Mischschnecke SM ermöglicht es, in diesem Bereich im Boden 14 eine Aussparung und in der Behälterwand eine in Richtung Mischraum 19 gerichtete konkave Kontur 16 vorzusehen. Hierdurch werden auf beiden Seiten des Futtermischwagens Freiräume 30 ausgebildet, in denen Teilbereiche der Räder 11, 11' aufnehmbar sind.

Die Figuren 2 und 3 zeigen den Futtermischwagen 100 gemäß Figur 1 jeweils in einer Draufsicht. Zur besseren Veranschaulichung einer Innenansicht von Mischbehälter 12 und Boden 14 ist der Futtermischwagen 100 gemäß Figur 3 ohne Mischschnecken dargestellt.

Der Futtermischwagen 100 weist eine Spurbreite 17 auf, die durch den Abstand der Außenseite der Räder 11 zu der Außenseite der Räder 11' definiert ist.

Der Mischbehälter 12 hat eine Breite 31 und wird zur in Fahrtrichtung FR gesehen rechten und linken Außenseite des Mischbehälters 12 von den starren Bauteilen der Ausbringeinrichtung 32 um rechte und linke Überstände 26 überragt. Der Futtermischwagen 100 hat eine Mischwagenbreite 18, die durch den Abstand der Außenpunkte der den Mischbehälter 12 überragenden starren Bauteile definiert ist.

Im dargestellten Ausführungsbeispiel sind Mischwagenbreite 18 und Spurbreite 17 gleich groß.

Die Mischschnecken SV, SH und SM überstreichen bei Rotation den Boden 14 in Form dreier aneinander gereihter Kreise (vgl. Fig. 3). Im dargestellten Ausführungsbeispiel ist der Boden 14 mit einer Umfangskontur 24 ausgebildet, die aus den zusammengesetzten Kreisbogenabschnitten der benachbarten Kreiskonturen 35V, 35M und 35H gebildet wird.

In einem anderen Ausführungsbeispiel (nicht dargestellt) können die Mischschnecken so angeordnet sein, dass die von den Mischschnecken überstrichenen Konturen einander lediglich tangieren oder gar nicht berühren. In einem solchen Fall werden Kollisionen zweier Mischschnecken grundsätzlich vermieden und es ist beispielsweise möglich, eine kleinere mittlere Mischschnecke mit einer gegenüber der vorderen und/oder hinteren Mischschnecke erhöhten Drehzahl anzutreiben um die Mischleistung der mittleren Mischschnecke zu vergrößern.

Vorzugsweise weisen die Kreiskonturen 35V, 35H, 35M Radien 35-RV, 35-RH, 35-RM auf, die an die Radien RV, RH, RM der Mischschnecken SV, SH, SM angepasst sind, so dass die Mischschnecken SV, SH, SM im Arbeitseinsatz die Bodenfläche 14 des Mischbehälters 12 vollständig überstreichen.

Die Schnecken SV, SH und SM sind so angeordnet, dass bei Rotation der Mischschnecken zwischen der mittleren Mischschnecke SM und den davor und dahinter anschließenden Mischschnecken SV und SH Übergangsbereiche 33 ausgebildet werden, in denen ein Austausch der Mischgüter aus dem Bereich einer Mischschnecke in den Bereich einer anderen Mischschnecke ermöglicht wird. Um Kollisionen der Mischschnecken untereinander zu vermeiden, sind die Mischschnecken so angeordnet, dass in den Übergangsbereichen 33 ein minimales Spiel zwischen den Mischschnecken verbleibt. Da auch zwischen Behälterwand 13 und den Mischschnecken SV, SH und SM ein minimales Spiel vorgesehen ist, ergibt sich am Boden 14 des Mischbehälters 12 die aus Kreisbogenabschnitten zusammengesetzte Umfangskontur 24, die eine Ausgangslinie für die sich daran anschließende Behälterwand 13 ausbildet. Die Behälterwand 13 bildet gemeinsam mit in den Mischbehälter 12 eingesetzten Leitelementen 23 eine sich von einer unteren Behälterinnenweite 21 zu einer oberen Behälterinnenweite 22 des Mischbehälters 12 hin konisch erweiternde Kontur des Mischraums 19 aus.

Die Außenkanten der Räder 11, 11' überragen die Kontur des Mischbehälters 12, nicht jedoch die Kontur der Ausbringeinrichtung 32, die den Mischbehälter 12 um einen Überstand 26 überragt. Im dargestellten Ausführungsbeispiel entspricht die Spurbreite 17 somit der Mischwagenbreite 18. Wie die Figuren 2 und 3 zeigen, ist in Draufsicht gesehen ein Teilbereich der Räder 11, 11' von der Kontur des Mischbehälters 12 verdeckt bzw. befindet sich in der konkaven Kontur des Freiraums 30.

Die Figuren 4 bis 6 zeigen ein zweites Ausführungsbeispiel eines Futtermischwagens 100'. Während der Futtermischwagen 100 eine mittlere Mischschnecke SM aufweist, umfasst der Futtermischwagen 100' zwei mittlere Mischschnecken SM. Insgesamt ergibt sich durch die zusätzliche Mischschnecke ein verlängerter Mischbehälter 12 mit einem vergrößerten Mischraum 19. Die Konzeption des Futtermischwagens 100' ist an die zusätzliche Schnecke angepasst. Der Futtermischwagen gemäß dem Ausführungsbeispiel der Figuren 4 bis 6 weist deshalb alternativ zu dem Futtermischwagen mit Tandem-Fahrwerk gemäß der Figuren 1 bis 3 ein Fahrgestell 10 mit einem Tridem-Fahrwerk auf. Bei dem dargestellten Tridem-Fahrwerk sind drei Räder 11 an der in Fahrtrichtung FR gesehen rechten Seite angeordnet und drei Räder 11' an der linken Seite. Analog zu dem Futtermischwagen mit Tandem-Fahrwerk ist das Fahrgestell 10 unterhalb des Bodens 14 angebracht und auch die Achsen der Räder 11, 11' befinden sich unterhalb des Bodens. Wie Figur 4 zeigt ergibt sich auch bei einem Futtermischwagen mit Tridem-Fahrwerk in der Behälterwand eine in Richtung Mischraum 19 gerichtete konkave Kontur 16, durch die Freiräume 30 ausgebildet sind, in denen Teilbereiche der Räder 11, 11' aufnehmbar sind.

Grundsätzlich ist nicht ausgeschlossen, einen Futtermischwagen zu konzipieren, der nicht nur ein oder zwei, sondern weitere mittlere Mischschnecken SM umfasst. Allen diesen Mischwagen gemeinsam ist, dass wenigstens eine mittlere Mischschnecke SM einen kleineren Radius RM hat, als die vordere und/oder hintere Mischschnecke SV bzw. SH.

### Bezugszeichenliste

- 10: Fahrgestell (von 100)
- 11, 11': Rad
- 12: Mischbehälter
- 13: Behälterwand
- 14: Boden (von 12)
- 15: Mischeinrichtung
- 16: konkave Kontur
- 17: Spurbreite
- 18: Mischwagenbreite
- 19: Mischraum (von 12)
- 20: Mittelachse (von 100, 100')
- 21: untere Behälterinnenweite
- 22: obere Behälterinnweite
- 23: Leitelement
- 24: Umfangskontur
- 25: oberer Rand (von 12)
- 26: Überstand
- 27: Zentralrohr
- 28: Schneckenwindung
- 29V: Mittelachse (von SV)
- 29H: Mittelachse (von SH)
- 29M: Mittelachse (von SM)
- 30: Freiraum
- 31: Breite (von 12)
- 32: Ausbringeinrichtung
- 33: Übergangsbereich
- 34: -
- 35V: Kreiskontur (von 14)
- 35H: Kreiskontur (von 14)
- 35M: Kreiskontur (von 14)
- 35-RV: Radius (von 35V)
- 35-RH: Radius (von 35H)
- 35-RM: Radius (von 35M)
- 100: Futtermischwagen
- 100': Futtermischwagen

- RV: erster Radius (vordere Mischschnecke)
- RH: zweiter Radius (hintere Mischschnecke)
- RM: dritter Radius (mittlere Mischschnecke)
- FR: Fahrtrichtung
- SV: vordere Mischschnecke
- SH: hintere Mischschnecke
- SM: mittlere Mischschnecke

## Patentansprüche

1. Futtermischwagen (100; 100'), umfassend:
- ein Fahrgestell (10) mit daran angebrachten Rädern (11, 11'),
- einen Mischbehälter (12) mit einer umlaufenden Behälterwand (13), einem Boden (14) und einer in Fahrtrichtung (FR) ausgerichteten Mittelachse (20),
- eine im Mischbehälter (12) angeordnete Mischeinrichtung (15) zur Verarbeitung eines oder mehrerer in den Mischbehälter (12) eingefüllten Futtermittels,
- wobei die Mischeinrichtung (15) Mischschnecken (SV, SH, SM) mit Radien (RV, RH, RM) und Zentralrohr-Mittelachsen (29V, 29H, 29M) aufweist und wobei unter einem Radius (RH, RV, RM) ein Maximalradius verstanden wird, der sich aus dem Abstand der Zentralrohr-Mittelachse (29V, 29H, 29M) zum äußersten Punkt der Schneckenwindung (28) ergibt,
- wobei die in Fahrtrichtung (FR) gesehen vordere Mischschnecke (SV) den ersten Radius (RV),
- die in Fahrtrichtung (FR) gesehen hintere Mischschnecke (SH) den zweiten Radius (RH),
- sowie die wenigstens eine zwischen der vorderen Mischschnecke (SV) und der hinteren Mischschnecke (SH) angeordnete mittlere Mischschnecke (SM) den dritten Radius (RM)
aufweist,
- und wobei die Mischschnecken (SV, SM, SH) hintereinander entlang der Mittelachse (20) des Futtermischwagens (100) angeordnet sind und die Mittelachse (20) schneiden,
**dadurch gekennzeichnet, dass**
- der dritte Radius (RM) wenigstens einer mittleren Mischschnecke (SM) kleiner ist als der erste Radius (RV) der vorderen Mischschnecke (SV) und/oder der zweite Radius (RH) der hinteren Mischschnecke (SH)
- der Mischbehälter (12) im Bereich der einen oder der mehreren mittleren Mischschnecke(n) (SM) eine konkave Kontur (16) mit außerhalb des Vorratsbehälters (12) angeordneten Freiräumen (30) zur Aufnahme eines Teilbereichs der Räder (11, 11') aufweist.

2. Futtermischwagen (100; 100') nach Anspruch 1, **dadurch gekennzeichnet, dass** der erste Radius (RV) der vorderen Mischschnecke (SV) und der zweite Radius (RH) der hinteren Mischschnecke (SH) gleich groß sind.

3. Futtermischwagen (100; 100') nach einem der Ansprüche 1 oder 2, **dadurch gekennzeichnet, dass** die am Fahrgestell (10) montierten Räder (11, 11') eine äußere Spurbreite (17) aufweisen, die eine Mischwagenbreite (18) des Mischbehälters (12) zu jeder Außenseite des Mischbehälters (12) hin um einen Überstand von weniger als 300 mm, vorzugsweise von weniger als 150 mm, höchst vorzugsweise von 0 mm überragt.

4. Futtermischwagen (100; 100') nach einem der Ansprüche 1 bis 3, **dadurch gekennzeichnet, dass** die Behälterwand (13) des Mischbehälters (12) sich im Bereich der mittleren Mischschnecke (SM) von einer unteren Behälterinnenweite (21) zu einer oberen Behälterinnenweite (22) konisch erweitert und die Räder (11, 11') zumindest teilweise überragt.

5. Futtermischwagen (100; 100') nach einem der Ansprüche 1 bis 4, **dadurch gekennzeichnet, dass** der Mischbehälter (12) einen Mischraum (19) mit darin angebrachten Leitelementen (23) aufweist, wobei die Leitelemente (23) im Bereich des Bodens (14) gemeinsam mit Teilbereichen der Behälterwand (13) eine an die Radien (RV, RH, RM) der Mischschnecken (SV, SH, SM) angepasste Umfangskontur (24) aufweisen, so dass bei Rotation der Mischschnecken (SV, SH, SM) der Boden (14) weitgehend vollständig von den Mischschnecken (SV, SH und SM) überstrichen wird.

6. Futtermischwagen (100; 100') nach Anspruch 5, **dadurch gekennzeichnet, dass** die von der Behälterwand (13) und den Leitelementen (23) am Boden (14) des Futtermischwagens (100; 100') gebildete Umfangskontur (24) sich in Richtung eines oberen Randes (25) des Mischbehälters (12) konisch erweitert.

7. Futtermischwagen (100; 100') nach einem der Ansprüche 1 bis 6, **dadurch gekennzeichnet, dass** der Mischbehälter (12) in selbsttragender Bauweise ausgeführt ist.

8. Futtermischwagen (100; 100') nach einem der Ansprüche 1 bis 7, **dadurch gekennzeichnet, dass** der Futtermischwagen (100; 100') ein Getriebe oder einen hydraulischen Antrieb oder einen elektrischen Antrieb zum Antrieb der mittleren Mischschnecke (SM) umfasst und die mittlere Mischschnecke (SM), welche den gegenüber der vorderen Mischschnecke (SV) und/oder der hinteren Mischschnecke (SH) kleineren dritten Radius (RM) aufweist, mit einer gegenüber der vorderen Mischschnecke (SV) und/oder der hinteren Mischschnecke (SH) größeren Drehzahl antreibbar ist, so dass die Mischschnecken (SV, SM, SH) im Arbeitseinsatz eine gleiche Umfangsgeschwindigkeit aufweisen.

9. Futtermischwagen (100; 100') nach einem der Ansprüche 1 bis 7, **dadurch gekennzeichnet, dass** der Futtermischwagen (100; 100') ein Getriebe oder einen hydraulischen Antrieb oder einen elektrischen Antrieb zum Antrieb der mittleren Mischschnecke (SM) umfasst und die mittlere Mischschnecke (SM), welche den gegenüber der vorderen Mischschnecke (SV) und/oder der hinteren Mischschnecke (SH) kleineren dritten Radius (RM) aufweist, mit einer gegenüber der vorderen Mischschnecke (SV) und/oder der hinteren Mischschnecke (SH) größeren Drehzahl antreibbar ist, so dass die mittlere Mischschnecke (SM) im Arbeitseinsatz eine größere Umfangsgeschwindigkeit aufweist als die vordere Mischschnecke (SV) und/oder die hintere Mischschnecke (SH).

10. Futtermischwagen (100; 100') nach einem der Ansprüche 1 bis 9, **dadurch gekennzeichnet, dass** die mittlere Mischschnecke (SM) eine Schneckenwindung (28) mit einer Steigung aufweist, die größer ist als eine Steigung der vorderen Mischschnecke (SV und/oder der hinteren Mischschnecke (SH).

11. Futtermischwagen (100; 100') nach einem der Ansprüche 1 bis 10, **dadurch gekennzeichnet, dass** der Futtermischwagen (100; 100') eine Verstelleinrichtung zur Änderung der Drehzahl wenigstens einer Mischschnecke (SV, SM, SH) aufweist.

12. Futtermischwagen (100; 100') nach einem der Ansprüche 1 bis 11, **dadurch gekennzeichnet, dass** am Boden (14) des Mischbehälters (12) eine aus Kreisbogenabschnitten zusammengesetzte Umfangskontur (24) ausgebildet ist, die eine Ausgangslinie für die sich daran anschließende Behälterwand (13) ausbildet.

## Claims

1. Feed mixer wagon (100; 100'), comprising:
- a chassis (10) with wheels (11, 11') mounted thereon,
- a mixing container (12) with a circumferential container wall (13), a floor (14) and a central axis (20) aligned with the travel direction (FR),
- a mixing device (15) arranged within the mixing container (12) for processing one or more feedstuffs filled into the mixing container (12),
- wherein the mixing device (15) comprises mixing screws (SV, SH, SM) with radii (RV, RH, RM) and central pipe centre lines (29V, 29H, 29M), and wherein a radius (RH, RV, RM) is understood to mean a maximum radius resulting from the distance between the central pipe centreline (29V, 29H, 29M) and the outermost point of the screw winding (28),
- wherein the front mixing screw (SV), as viewed in the travel direction (FR), has the first radius (RV),
- the rear mixing screw (SH), as viewed in the travel direction (FR), has the second radius (RH),
- as well as the at least one central mixing screw (SM), arranged between the front mixing screw (SV) and the rear mixing screw (SH), has the third radius (RM),
- and wherein the mixing screws (SV, SM, SH) are arranged one behind the other along the central axis (20) of the feed mixer wagon (100) and intersect the central axis (20),
**characterised in that**
- the third radius (RM) of at least one central mixing screw (SM) is smaller than the first radius (RV) of the front mixing screw (SV) and/or the second radius (RH) of the rear mixing screw (SH)
- the mixing container (12) has, in the region of the one or more central mixing screws (SM), a concave contour (16) with clearances (30) arranged outside the mixing container (12) to accommodate a portion of the wheels (11, 11').

2. Feed mixer wagon (100; 100') according to claim 1, **characterised in that** the first radius (RV) of the front mixing screw (SV) and the second radius (RH) of the rear mixing screw (SH) are of equal size.

3. Feed mixer wagon (100; 100') according to any one of claims 1 or 2, **characterised in that** the wheels (11, 11') mounted on the chassis (10) (11, 11') have an outer track width (17), which extends beyond the mixer width (18) of the mixing container (12) towards each outer side of the mixing container (12) by a projection of less than 300 mm, preferably less than 150 mm, and most preferably 0 mm.

4. Feed mixer wagon (100; 100') according to any one of claims 1 to 3, **characterised in that** the container wall (13) of the mixing container (12) tapers in the region of the central mixing screw (SM) from a lower internal container width (21) to an upper internal container width (22) and at least partially protrudes beyond the wheels (11, 11').

5. Feed mixer wagon (100; 100') according to any one of claims 1 to 4, **characterised in that** the mixing container (12) comprises a mixing chamber (19) with guide elements (23) mounted therein, wherein the guide elements (23) in the region of the floor (14), together with sub-regions of the container wall (13), have a circumferential contour (24) adapted to the radii (RV, RH, RM) of the mixing screws (SV, SH, SM), so that when the mixing screws (SV, SH, SM) rotate, the floor (14) is movably covered almost entirely by the mixing screws (SV, SH and SM).

6. Feed mixer wagon (100; 100') according to claim 5, **characterised in that** the circumferential contour (24) formed by the container wall (13) and the guide elements (23) on the floor (14) of the feed mixer wagon (100; 100') conically expands in longitudinal direction towards an upper edge (25) of the mixing container (12).

7. Feed mixer wagon (100; 100') according to any one of claims 1 to 6, **characterised in that** the mixing container (12) is of a self-supporting design.

8. Feed mixer wagon (100; 100') according to any one of claims 1 to 7, **characterised in that** the feed mixer wagon (100; 100') comprises a gearbox or a hydraulic drive or an electric drive for driving the central mixing screw (SM), and the central mixing screw (SM), which has the smaller third radius (RM) compared to that of the front mixing screw (SV) and/or the rear mixing screw (SH), can be driven at a higher speed of rotation than the front mixing screw (SV) and/or the rear mixing screw (SH), so that the mixing screws (SV, SM, SH) have the same circumferential speed during operation.

9. Feed mixer wagon (100; 100') according to any one of claims 1 to 7, **characterised in that** the feed mixer wagon (100; 100') comprises a gearbox or a hydraulic drive or an electric drive for driving the central mixing screw (SM), and the central mixing screw (SM), which has the smaller third radius compared to that of the front mixing screw (SV) and/or the rear mixing screw (SH) (RM), can be driven at a higher speed of rotation than the front mixing screw (SV) and/or the rear mixing screw (SH), so that, during operation, the central mixing screw (SM) has a higher circumferential speed than the front mixing screw (SV) and/or the rear mixing screw (SH).

10. Feed mixer wagon (100; 100') according to any one of claims 1 to 9, **characterised in that** the central mixing screw (SM) has a screw winding (28) with a pitch, that is greater than the pitch of the front mixing screw (SV) and/or the rear mixing screw (SH).

11. Feed mixer wagon (100; 100') according to any one of claims 1 to 10, **characterised in that** the feed mixer wagon (100; 100') comprises an adjustment device for varying the speed of rotation of at least one mixing screw (SV, SM, SH).

12. Feed mixer wagon (100; 100') according to any one of claims 1 to 11, **characterised in that** a circumferential contour (24) composed of circular arc segments is formed on the floor (14) of the mixing container (12), which contour forms a starting line for the adjoining container wall (13).

## Revendications

1. Mélangeuse (100 ; 100'), comprenant :
- un châssis (10) sur lequel sont montées des roues (11, 11'),
- un récipient mélangeur (12) comportant une paroi de la cuve (13), un fond (14) et un axe central (20) orienté dans le sens de marche (FR),
- un dispositif de mélange (15) disposé dans le récipient mélangeur (12) et destiné au traitement d'un ou plusieurs aliments pour animaux versés dans le récipient mélangeur (12),
- cependant le dispositif de mélange (15) comporte des vis mélangeuses (SV, SH, SM) présentant des rayons (RV, RH, RM) et des axes centraux de tube central (29V, 29H, 29M), et un rayon (RH, RV, RM) étant défini comme le rayon maximal résultant de la distance entre l'axe central du tube (29V, 29H, 29M) et le point le plus extérieur de la vis sans fin (28),
- cependant la vis mélangeuse avant (SV), vue dans le sens de marche (FR), présente le premier rayon (RV),
- la vis mélangeuse arrière (SH), vue dans le sens de marche (FR), présente le deuxième rayon (RH),
- et la au moins une vis mélangeuse centrale (SM), disposée entre la vis mélangeuse avant (SV) et la vis mélangeuse arrière (SH), présente le troisième rayon (RM),
- et cependant dans laquelle les vis mélangeuses (SV, SM, SH) sont disposées les unes derrière les autres le long de l'axe central (20) de la mélangeuse (100) et coupent l'axe central (20),
**caractérisée en ce que**
- le troisième rayon (RM) d'au moins une vis mélangeuse centrale (SM) est inférieur au premier rayon (RV) de la vis mélangeuse avant (SV) et/ou au deuxième rayon (RH) de la vis mélangeuse arrière (SH)
- le récipient mélangeur (12) présente, dans la zone de la ou des vis mélangeuses centrales (SM), un contour concave (16) comportant des espaces libres (30) disposés à l'extérieur du récipient mélangeur (12) pour recevoir une partie des roues (11, 11').

2. Mélangeuse (100 ; 100') selon la revendication 1, **caractérisée en ce que** le premier rayon (RV) de la vis mélangeuse avant (SV) et le deuxième rayon (RH) de la vis mélangeuse arrière (SH) sont de même valeur.

3. Mélangeuse (100 ; 100') selon l'une des revendications 1 ou 2, **caractérisée en ce que** les roues (11, 11') montées sur le châssis (10) présentent une voie extérieure (17) qui dépasse la largeur (18) du récipient mélangeur (12) vers chaque côté extérieur de celui-ci d'un débord inférieur à 300 mm, de préférence inférieur à 150 mm, et de manière encore plus préférable de 0 mm.

4. Mélangeuse (100 ; 100') selon l'une des revendications 1 à 3, **caractérisée en ce que** la paroi de la cuve (13) du récipient mélangeur (12) s'élargit de manière conique, dans la zone de la vis mélangeuse centrale (SM), d'une largeur intérieure inférieure (21) du récipient à une largeur intérieure supérieure (22) du récipient, et dépasse au moins partiellement les roues (11, 11').

5. Mélangeuse (100 ; 100') selon l'une des revendications 1 à 4, **caractérisée en ce que** le récipient mélangeur (12) comporte une chambre de mélange (19) dans laquelle sont disposés des éléments de guidage (23), lesdits éléments de guidage (23) présentant, au niveau du fond (14), conjointement avec des zones partielles de la paroi de la cuve (13), un contour périphérique (24) adapté aux rayons (RV, RH, RM) des vis mélangeuses (SV, SH, SM), de sorte que, lors de la rotation des vis mélangeuses (SV, SH, SM), le fond (14) soit balayé presque entièrement par les vis mélangeuses (SV, SH et SM).

6. Mélangeuse (100 ; 100') selon la revendication 5, **caractérisée en ce que** le contour périphérique (24) formé par la paroi de la cuve (13) et les éléments de guidage (23) au niveau du fond (14) de la Mélangeuse (100 ; 100') s'élargit de manière conique en direction d'un bord supérieur (25) du récipient mélangeur (12).

7. Mélangeuse (100 ; 100') selon l'une des revendications 1 à 6, **caractérisée en ce que** le récipient mélangeur (12) est réalisé selon une construction autoportante.

8. Mélangeuse (100 ; 100') selon l'une des revendications 1 à 7, **caractérisée en ce que** la mélangeuse (100 ; 100') comprend un engrenage ou un entraînement hydraulique ou un entraînement électrique pour entraîner la vis mélangeuse centrale (SM) et la vis mélangeuse centrale (SM), qui présente un troisième rayon (RM) plus petit que celui de la vis mélangeuse avant (SV) et/ou de la vis mélangeuse arrière (SH), peut être entraînée à une vitesse de rotation supérieure à celle de la vis mélangeuse avant (SV) et/ou de la vis mélangeuse arrière (SH), de sorte que les vis mélangeuses (SV, SM, SH) présentent une vitesse périphérique identique en fonctionnement.

9. Mélangeuse (100 ; 100') selon l'une des revendications 1 à 7, **caractérisée en ce que** la mélangeuse (100 ; 100') comprend une transmission, un entraînement hydraulique ou un entraînement électrique pour entraîner la vis mélangeuse centrale (SM), et la vis mélangeuse centrale (SM), qui présente le troisième rayon (RM) plus petit que celui de la vis mélangeuse avant (SV) et/ou de la vis mélangeuse arrière (SH), peut être entraînée à une vitesse de rotation supérieure à celle de la vis mélangeuse avant (SV) et/ou de la vis mélangeuse arrière (SH), de sorte que la vis mélangeuse centrale (SM) présente, en fonctionnement, une vitesse périphérique supérieure à celle de la vis mélangeuse avant (SV) et/ou de la vis mélangeuse arrière (SH).

10. Mélangeuse (100 ; 100') selon l'une des revendications 1 à 9, **caractérisée en ce que** la vis mélangeuse centrale (SM) comporte une vis sans fin (28) dont le pas est supérieur à celui de la vis mélangeuse avant (SV) et/ou de la vis mélangeuse arrière (SH).

11. Mélangeuse (100 ; 100') selon l'une des revendications 1 à 10, **caractérisée en ce que** la mélangeuse (100 ; 100') comporte un dispositif de réglage permettant de modifier la vitesse de rotation d'au moins une vis mélangeuse (SV, SM, SH).

12. Mélangeuse (100 ; 100') selon l'une des revendications 1 à 11, **caractérisée en ce que,** au fond (14) du récipient mélangeur (12), est formé un contour périphérique (24) composé de segments d'arc de cercle, qui constitue une ligne de départ pour la paroi de la cuve (13) qui s'y raccorde.
